(19) Europäisches Patentamt
European Patent Office
Office européen des brevets

(11) **EP 2 769 883 B1**

(12) **EUROPEAN PATENT SPECIFICATION**

(45) Date of publication and mention
of the grant of the patent:
**27.03.2019 Bulletin 2019/13**

(21) Application number: **12841876.1**

(22) Date of filing: **20.09.2012**

(51) Int Cl.:
**B60R 16/02** (2006.01)    **B60G 17/0195** (2006.01)
**B62D 15/02** (2006.01)    **B60G 17/0165** (2006.01)
**B60G 17/02** (2006.01)    **B60K 35/00** (2006.01)
**B60W 50/14** (2012.01)    **H04N 7/18** (2006.01)
**B60G 99/00** (2010.01)

(86) International application number:
**PCT/JP2012/074054**

(87) International publication number:
**WO 2013/058049 (25.04.2013 Gazette 2013/17)**

(54) **VEHICLE DRIVING SUPPORT DEVICE**

HILFSVORRICHTUNG ZUM FÜHREN EINES FAHRZEUGS

DISPOSITIF D'AIDE À LA CONDUITE DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.10.2011 JP 2011232060**

(43) Date of publication of application:
**27.08.2014 Bulletin 2014/35**

(73) Proprietor: **AISIN SEIKI KABUSHIKI KAISHA
Kariya-shi,
Aichi 448-8650 (JP)**

(72) Inventor: **WATANABE, Kazuya
Kariya-shi,
Aichi 448-8650 (JP)**

(74) Representative: **TBK
Bavariaring 4-6
80336 München (DE)**

(56) References cited:
**WO-A1-2011/010346     GB-A- 2 319 107
JP-A- 2007 290 551     JP-A- 2007 290 551
JP-A- 2008 254 703     JP-A- 2009 056 848
JP-A- 2009 056 848     JP-A- 2010 234 937
JP-A- 2010 234 937     JP-U- H0 556 783
US-A1- 2007 164 852**

- budds: "Land Rover LR3 - Technology", , 1
December 2008 (2008-12-01), XP054975745,
Retrieved from the Internet:
URL:https://www.youtube.com/watch?v=z1BCB
U 2xvV0 [retrieved on 2015-02-17]
- artvlive: "2010 Land Rover LR4's 360 Camera
System", , 27 August 2009 (2009-08-27),
XP054975746, Retrieved from the Internet:
URL:https://www.youtube.com/watch?v=AdF7Y
6 kicd0 [retrieved on 2015-02-17]

## Description

Technical Field

The present invention relates to a vehicle driving support device for supporting a driver by displaying information related to vehicle driving on a monitor mounted in a vehicle.

Background Art

Vehicle driving support devices are well-known, which display, on a monitor, an image that is photographed by an on-vehicle camera and includes an area which is a blind spot for the driver around the vehicle. Recently, moreover, vehicle driving support devices have also been available that display, on a monitor, an overhead image obtained by performing viewpoint conversion on a photographic image into an image viewed from a viewpoint above the vehicle.

A vehicle driving support device for a vehicle that runs on off roads, such as rocky areas and gravel roads, is disclosed in Patent Document 1. In order that a wheel does not come off or enter the ground in a bad driving condition, this vehicle driving support device is provided with an image capturing means for capturing a travelling-direction image obtained by photographing an image in the travelling direction of the vehicle, a steering angle detection means for detecting the steering angle of the vehicle, a route image generating means for predicting a travelling route of each wheel provided on the travelling-direction side of the vehicle, based on the steering angle, and generating a route image that indicates a travelling route of each wheel viewed from the viewpoint of the image capturing means, a superimposed image generating means for generating a superimposed image that is obtained by superimposing the route image on the travelling-direction image, and an image display means for displaying the superimposed image. Using such a vehicle driving support device, the driver can visually recognize, through a monitor, the superimposed image indicating the state around the vehicle and the travelling route of the wheels of the vehicle, and check the travelling route. Accordingly, the driver drives the vehicle so as to avoid coming-off of the wheels or to move onto a desired rocky area by changing the steering angle while viewing the image displayed on the monitor.

However, toe-in of steered wheels changes due to a change of the suspension stroke of the vehicle, and the turning angle also changes due to the change of the toe-in. For this reason, technique for adjusting the turning angle in accordance with the change of the suspension stroke in order to obtain a desired running path is known from Patent Document 2, for example.

Furthermore, a vehicle suspension control device for setting a suspension control value that is most suitable for the road shape in order to improve the riding comfort on a rough road is disclosed in Patent Document 3. This vehicle suspension control device is provided with a suspension control characteristic learning means for setting a suspension control characteristic in accordance with a road shape and storing the suspension control characteristic in association with a road position in a storing means, when the shape of the road on which the vehicle is running satisfies a predetermined condition, a suspension characteristic control means for controlling the suspension characteristic based on the stored suspension control characteristic, when the vehicle runs at the road position regarding which the suspension control characteristic has already been learned, a display means (monitor) for displaying the stored suspension control characteristic, together with road information, for a driver, and a suspension control characteristic change means for changing the suspension control characteristic at a stored predetermined road position, based on a desired input suspension control characteristic at the predetermined road position. The monitor displays the stored suspension control characteristic together with the road information. However, since this vehicle suspension control device aims for setting the most suitable suspension control characteristic in advance in order to improve the riding comfort on a rough road, the device does not have a function of displaying the suspension control characteristic in real time during driving.

Prior Art Documents

Patent Document

Patent Document 1: WO2011/010346 (paragraphs 0005-0026, FIG. 9)
Patent Document 2: JP 2010-234937A (paragraph 0004-0016, FIG. 2)
Patent Document 3: JP 2006-240401A (paragraph 0003-0045, FIG. 1)

Disclosure of the Invention

Problem to be Solved by the Invention

In view of the foregoing situation, an object of the present invention is to provide a vehicle driving support device capable of supporting vehicle driving in consideration of a real-time behavior (current behavior) of a suspension mechanism.

Means for Solving Problem

To achieve the above-stated object, there is provided a vehicle driving support device according to claim 1. Further features and advantageous modifications are shown in the dependent claims.

With this configuration, the behavior value indicating a behavior state of the suspension mechanism is calculated for each wheel in real time, and the behavior value is imaged to generate the behavior image in order to visualize the calculated behavior value. Furthermore, the behavior image is displayed on the monitor, which enables the driver to be notified of the behavior state of the suspension mechanism. The driver can appropriately drive the vehicle by performing an appropriate steering operation and accelerator operation, based on the behavior state of the suspension mechanism. Such driving support achieves a particularly significant advantage in off-road driving during which the behavior state of the suspension mechanism frequently fluctuates.

During off-road driving, such as driving on a rocky area, the driver should be aware of which rock the wheels, particularly the front wheels, run on next. Accordingly, it is important to instinctively grasp the behavior value of each wheel. For this purpose, according to a preferable embodiment of the present invention, the behavior value is imaged as a wheel image in the vehicle image, and the behavior value is expressed by a visual difference in the wheel image. Since the behavior values are indicated with visually different wheel images, the driver can instinctively grasp the behavior values even if the monitor screen is small.

An idling state of a wheel is one of the phenomena that are caused as a result of a behavior of the suspension mechanism and are important for driving, although it is not directly a behavior state of the suspension mechanism. For this reason, in the present invention, the wheel idling state is also handled as a target vehicle behavior in the present invention, similarly to the suspension behavior. According to the present invention, the vehicle behavior calculation module is provided with an idling ratio calculation unit configured to find an idling ratio of the wheel as one kind of the behavior value. The driver can perform more appropriate driving by visually grasping the idling ratio (idling state) of each wheel on the monitor screen.

According to the invention, a method for imaging the idling ratio of each wheel to visually express the idling ratio is, for example, to indicate a wheel that is almost completely idling as if this wheel is idling in the vehicle image displayed on the monitor, or to provide a mark indicating idling near the wheel that is almost completely idling. Accordingly, according to a preferable embodiment of the present invention, the behavior image includes a wheel image that expresses the idling ratio of the wheel.

Further, a preferable method for imaging the idling ratio of each wheel to visually express the idling ratio is to express the calculated idling ratio with a color. For example, it is preferable that the wheel that is almost completely idling is indicated in red in the vehicle image displayed on the monitor, or a red mark is provided near the wheel. Accordingly, according to a preferable embodiment of the present invention, the idling ratio of the wheel can be expressed using a color.

One of the most important suspension behaviors for the driver is the suspension stroke length. This is because bump and rebound of a car can be grasped based on the suspension stroke length. Accordingly, it is preferable that the vehicle behavior calculation module is provided with a stroke length calculation unit configured to find a suspension stroke length of each wheel as one kind of the behavior value.

The driver can grasp the current behavior state of the suspension mechanism from the suspension image that is visually expressed by imaging the behavior state of the suspension mechanism, and accordingly the suspension image serves as reference information for the next driving operation. However, for an appropriate driving operation, it is also important to grasp the conditions around the vehicle, particularly the road conditions. For this purpose, according to a preferable embodiment of the present invention, the driving support image generation unit incorporates a photographic image given from an on-vehicle camera unit configured to photograph the front side of the vehicle and the left and right sides of the vehicle into the driving support image. Thus, the driver can simultaneously grasp the behavior state of the suspension mechanism and the road conditions around the vehicle through the driving support image displayed on the monitor.

According to a more preferable embodiment, the vehicle behavior calculation module is provided with a tire path calculation unit configured to find a predicted tire path based on a state of the suspension mechanism and a steering angle, and the driving support image generation unit incorporates the predicted tire path into the driving support image. Thus, the driving support image according to the present invention will assist accurate steering during off-road driving or the like.

Brief Description of Drawings

Fig. 1 is a schematic view illustrating imaging of behavior values according to the present invention.
Fig. 2 is a schematic view illustrating a sensor system in a vehicle equipped with a vehicle driving support device according to the present invention.
Fig. 3 is a functional block diagram showing functions related to the vehicle driving support device in a vehicle equipped with the vehicle driving support device according to the present invention.
Fig. 4 is a functional block diagram of the vehicle driving support device according to the present invention.
Fig. 5 is a monitor screen view showing an exemplary driving support image displayed on a monitor.
Fig. 6 is a monitor screen view showing another exemplary driving support image displayed on the monitor.
Fig. 7 is a schematic view illustrating behavior images made by imaging suspension stroke lengths.

Fig. 8 is a schematic view illustrating behavior images made by imaging suspension stroke lengths.

Fig. 9 is a monitor screen view showing yet another exemplary driving support image displayed on the monitor.

Best Mode for Carrying out the Invention

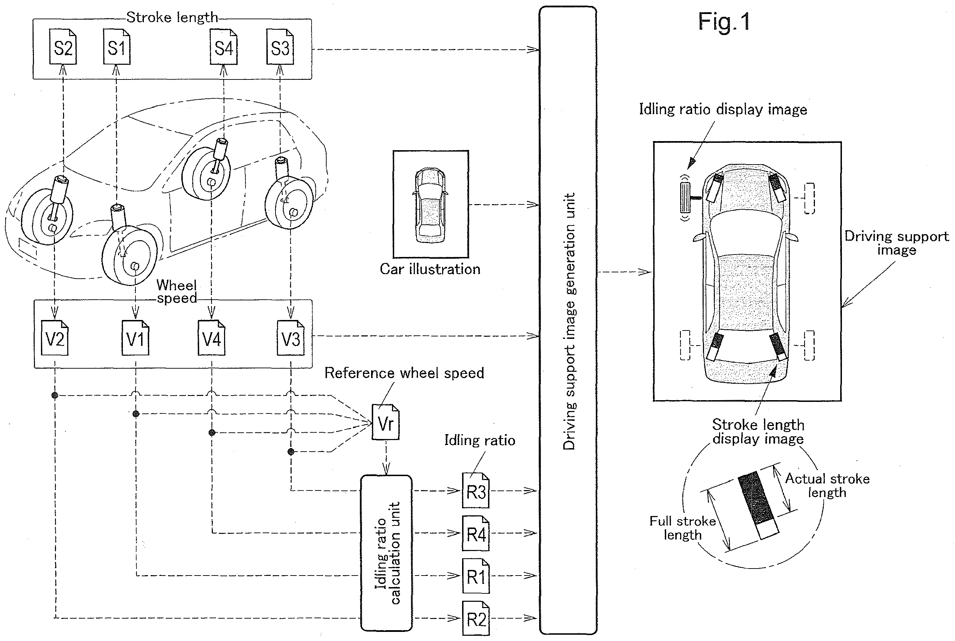

Prior to a description of a specific embodiment, a basic concept of driving support image generation by a vehicle driving support device of the present invention will be described using a schematic view in FIG. 1. Here, idling ratio display images and stroke length display images are employed as behavior images. Accordingly, this vehicle driving support device detects, as behavior values, suspension mechanism stroke lengths (hereinafter abbreviated simply as "stroke lengths") S1, S2, S3, S4 of left and right front wheels and left and right rear wheels of the suspension mechanism, and speeds of the wheels (hereinafter abbreviated simply as "wheel speeds") V1, V2, V3, V4 of the left and right front wheels and the left and right rear wheels, substantially in real time, that is, at a predetermined sampling cycle. Here, the idling ratio of each wheel is obtained as a ratio of the wheel speed of the wheel to a reference wheel speed Vr, which is a minimum value of the wheel speed: Vmin=Min (V1, V2, V3, V4) (Min() is a function for obtaining the minimum of input parameters). Accordingly, the idling ratios of the respective wheels are:

$$R1=V1/Vr$$

$$R2=V2/Vr$$

$$R3=V3/Vr$$

$$R4=V4/Vr$$

These values may possibly be 1.0 or larger (i.e., 100% or larger when expressed by percentage). Note that if the change ratio (acceleration) of the reference wheel speed obtained from the reference wheel speed that is chronologically calculated and output (where the calculation repetition cycle is 0.5 to 1.0 second) is larger than or equal to a predetermined value (e.g., 1G), it may be assumed that all wheels are idling due to a marshy driving road or the like.

Here, each stroke length display image is a rectangular frame in the form of a bar graph illustrating the wheel in a plan view, the long side of the rectangular frame indicating the full stroke length, and the above-obtained stroke lengths (actual stroke lengths) S1, S2, S3, S4 are indicated by filling in the respective rectangular frames by an amount corresponding to the actual stroke length. The idling ratio display image of a wheel whose idling ratio is larger than or equal to a predetermined ratio is a wheel illustration indicating idling, and the idling ratio display images of other wheels are displayed as blank or transparent images so as to be distinguished from the idling wheel illustration.

In the driving support image that is actually displayed on the monitor in this example, a car illustration in a plan view is provided, the stroke length display images of the wheels are disposed in the respective wheel areas in the car illustration, and the idling ratio display images of the wheels are disposed on the outside of the respective wheels. Through the thus generated driving support image, the driver can instinctively grasp the stroke lengths and the idling ratios of the respective wheels substantially in real time. In other words, the driver can instinctively grasp the current stroke lengths and idling ratios of the respective wheels. Although both the stroke length display images and the idling ratio display images are displayed as the behavior images in the shown driving support image, only one of them may be employed, or a display mode in which these images are displayed alternately and repeatedly may be employed. Of course images of behavior values indicating other suspension characteristics (vehicle roll angle or toe angle) may also be employed as the behavior images.

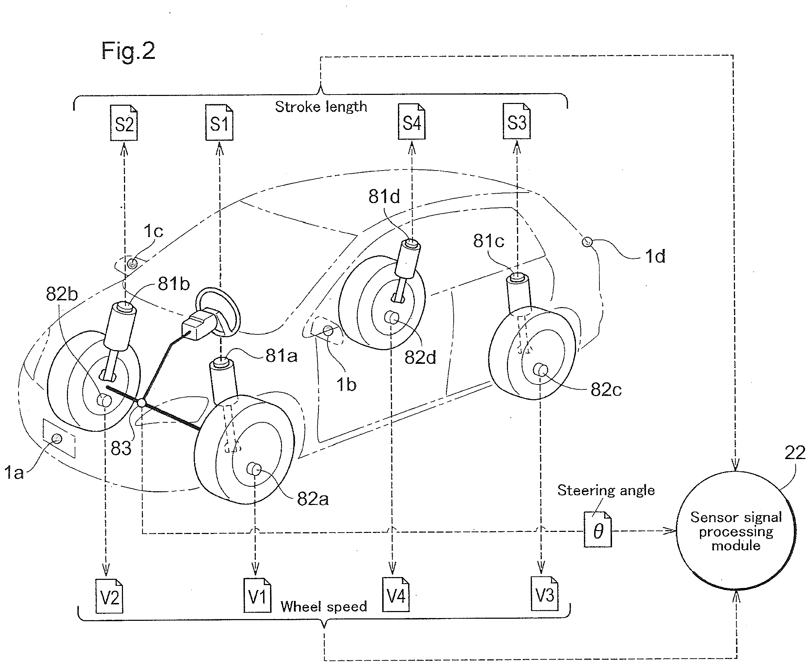

Hereinafter, an embodiment of the present invention will be described based on the drawings. Fig. 2 is a schematic view illustrating a sensor system in a vehicle equipped with the vehicle driving support device according to the present invention.

This vehicle is also provided with stroke length detectors 81a, 81b, 81c, 81d corresponding to the respective wheels to detect the stroke lengths of the left and right front wheels and the left and right rear wheels of the suspension mechanism, and speed detectors 82a, 82b, 82c, 82d for detecting the wheel speeds of the left and right front wheels and the left and right rear wheels. Furthermore, the vehicle is also provided with a steering angle detector 83 for detecting the steering angle of the front wheels serving as the steered wheels that are operated by a steering wheel.

The stroke lengths S1, S2, S3, S4 detected by the stroke length detectors 81a, 81b, 81c, 81d, the wheel speeds V1, V2, V3, V4 detected by the speed detectors 82a, 82b, 82c, 82d, and the steering angle θ detected by the steering angle detector 83 are transferred to a sensor signal processing module 22, subjected to necessary pre-processing, converted into an internally used format, and thereafter transmitted to a requesting control module.

The vehicle is also equipped with four on-vehicle cameras 1, namely a front camera 1a, a back camera 1d, a left side camera 1b, and a right side camera 1c, in order to photograph the surroundings of the vehicle. The photographic images from these on-vehicle cameras 1 are displayed as-is on the monitor as a monitor image for monitoring a particular surrounding area of the vehicle, and these photographic images are also able to be rendered into an entire circumferential overhead image. In the following description, the on-vehicle cameras 1a, 1b, 1c, 1d are also referred to collectively and simply as cameras 1 as appropriate. When vehicle surroundings monitor control works, images photographed by the cameras 1 or an overhead image that is generated using these photographic images is displayed on the monitor. The cameras 1 are digital cameras that convert photographic images obtained by photographing the surroundings of the vehicle in time series into digital images and output these digital images in real time. The cameras 1 are each provided with a wide-angle lens or a fish-eye lens.

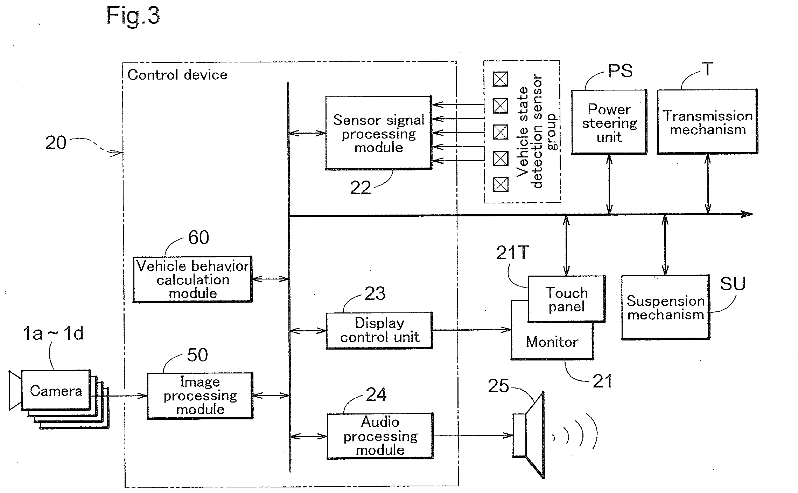

As shown in FIG. 3, a control device 20, which serves as the core of the vehicle driving support device, includes the aforementioned sensor signal processing module 22 that receives signal input from the sensors for detecting the behavior values, as well as a display control unit 23, an audio processing module 24, an image processing module 50, a vehicle behavior calculation module 60, and the like. This control device 20 is connected, via an in-vehicle LAN, to in-vehicle devices such as a monitor 21, a touch panel 21T, a power steering unit PS, a transmission mechanism T, and the suspension mechanism SU so as to be able to transmit data to these devices.

A vehicle state detection sensor group for detecting the state of driving operation and vehicle running, as well as the aforementioned sensors, are connected to the sensor signal processing module 22. Although not shown, the vehicle state detection sensor group includes a shift position sensor for discriminating the shift position of a shift lever, an accelerator sensor for measuring the amount of operation of an accelerator pedal, a brake sensor for detecting the amount of operation of a brake pedal, a distance sensor for detecting the running distance of the vehicle, and the like.

The display control unit 23 has a function of converting a monitor display image generated by the image processing module 50 into a video signal and transferring the video signal to the monitor 21. The audio processing module 24 outputs an audio guide, emergency warning sound, or the like through a speaker 25, based on a notified command .

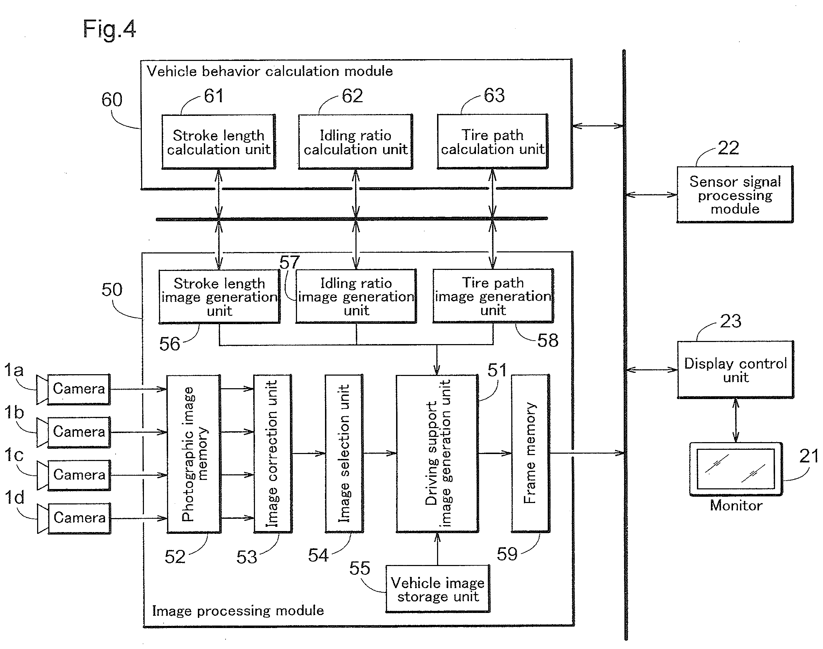

FIG. 4 shows a functional block diagram of the vehicle behavior calculation module 60 and the image processing module 50, which are the core constituent elements of the vehicle driving support device according to the present invention.

The vehicle behavior calculation module 60 in this embodiment has a stroke length calculation unit 61, an idling ratio calculation unit 62, and a tire path calculation unit 63, which serve as vehicle behavior value calculation units. The stroke length calculation unit 61 and the idling ratio calculation unit 62 function as behavior value calculation units. The stroke length calculation unit 61 calculates the stroke length based on a detected stroke length value of each wheel that is received via the sensor signal processing module 22. The idling ratio calculation unit 62 calculates the idling ratio of each wheel using the aforementioned equations, based on a detected wheel speed value of each wheel that is received via the sensor signal processing module 22. The tire path calculation unit 63 calculates a tire path indicating the running path of the vehicle, based on a detected steering angle value that is received via the sensor signal processing module 22. Note that when the tire path is calculated, consideration may be given to the toe angle that is defined by the stroke length calculated by the stroke length calculation unit 61.

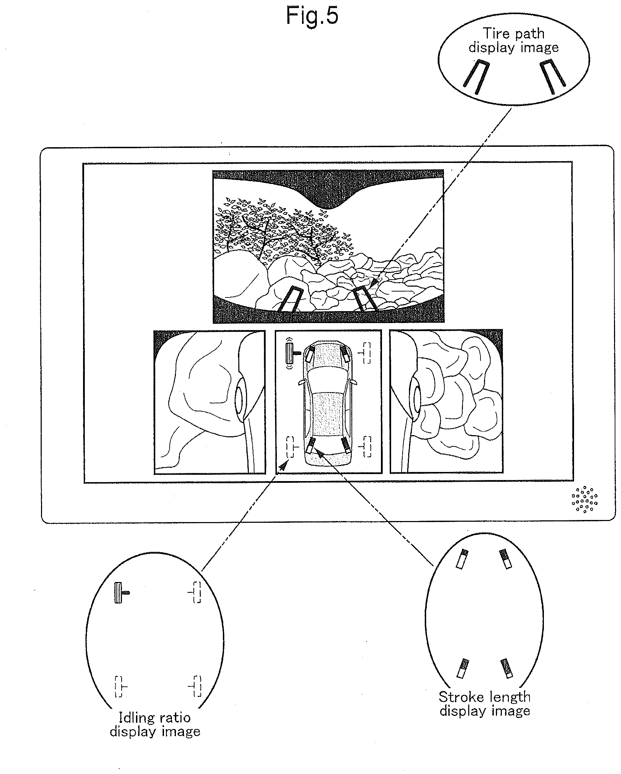

The image processing module 50 in this embodiment has a stroke length image generation unit 56, an idling ratio image generation unit 57, and a tire path image generation unit 58, each having a function of generating the behavior images. The stroke length image generation unit 56 generates stroke length display images as shown as an example in FIGS. 1 and 5, based on the stroke lengths of the wheels from the stroke length calculation unit 61. The idling ratio image generation unit 57 generates idling ratio display image as shown as an example in FIGS. 1 and 5, based on the idling ratios of the wheels from the idling ratio calculation unit 62. In these idling ratio display images, a predetermined idling ratio is used as a threshold value, a wheel with an idling ratio that is larger than or equal to the threshold value is assigned a solid wheel symbol, and a wheel with an idling ratio that is smaller than the threshold value is assigned a hollow wheel symbol. The tire path image generation unit 58 generates a tire path display image in which the tire paths for several meters ahead are drawn with outlines as shown as an example in FIG. 5, based on the tire path from the tire path calculation unit 63.

The image processing module 50 also has a photographic image memory 52, an image correction unit 53, and an image selection unit 54, each having a function of processing the photographic images acquired by the cameras 1 that photograph the surroundings of the vehicle and generating a surrounding area display image. The photographic images acquired by the cameras 1 are expanded in the photographic image memory 52 and subjected to brightness balance adjustment or color balance adjustment among the photographic images that are separately acquired by the cameras 1, distortion correction, trimming processing, and the like by the image correction unit 53. The image selection unit 54 selects a photographic image to be displayed on the monitor automatically or with a manual setting. The selected vehicle surroundings image may be one selected by the driver from the photographic images acquired by the front camera 1a, the left and right side cameras 1b and 1c, and the back camera 1d, or may be a combination of multiple photographic images.

The image processing module 50 also has a driving support image generation unit 51, a vehicle image storage unit 55, and a frame memory 59. The vehicle image storage unit 55 stores an illustration or a picture of the vehicle in a plan view that is used as the vehicle image in the driving support image. The driving support image generation unit 51 has a function of generating a driving support image in which vehicle behavior images including the behavior images made by imaging the behavior values obtained for the respective wheels are disposed at corresponding positions in the vehicle image. In this embodiment, the driving support image includes the tire path display image, the idling ratio display images, the stroke length display images, a front photographic image, left and right side photographic images, and the vehicle image, as shown as an example in FIG. 5. Accordingly, the driving support image generation unit 51 is connected to the stroke length image generation unit 56, the idling ratio image generation unit 57, the tire path image generation unit 58, the image selection unit 54, and the vehicle image storage unit 55. In the driving support image shown in FIG. 5, the front photographic image combined with the tire path display image is disposed in the upper area, the vehicle image combined with the stroke length display images and the idling ratio display images is disposed in the center of the lower area, and the left side photographic image and the right side photographic image are disposed on the respective sides of the vehicle image. The driving support image generated by the driving support image generation unit 51 is transferred as a monitor display image for vehicle driving support to the frame memory 59. The monitor display image that is transferred to the frame memory 59 is displayed on the monitor 21 via the display control unit 23.

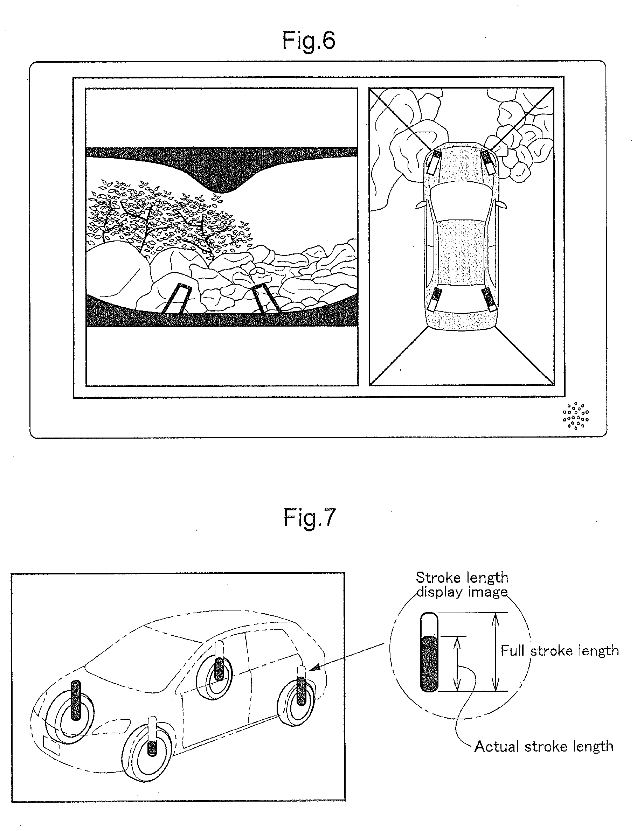

Although not shown in FIG. 4, the image processing module 50 may also be provided with an overhead image generating function of generating an overhead image by performing projective transformation with an upper virtual viewpoint on one or multiple photographic images expanded in the photographic image memory 52. An exemplary driving support image using this overhead image as a photographic image is shown in FIG. 6. In the driving support image shown in FIG. 6, the overhead image in which the vehicle image combined with the stroke length display images is positioned at the center is disposed in the right area, and the front photographic image combined with the tire path display image is disposed in the left area. Thus, various modes of the driving support image including the vehicle behavior images and the photographic images may be employed.

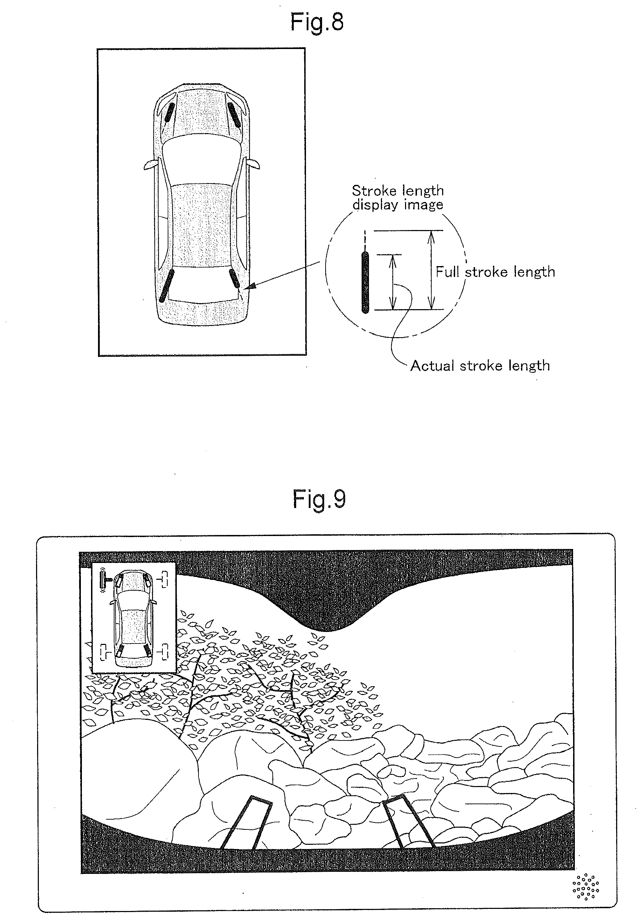

Behavior images in other modes of displaying the stroke lengths are shown in FIGS. 7 and 8. In the mode shown in FIG. 7, the actual stroke display image is generated as a design in which the full stroke length and the actual stroke length are indicated by bar graphs of different colors in a superimposed manner at the side of each wheel of a vehicle body shown by dotted lines in a perspective view. In the mode shown in FIG. 8, the actual stroke display image is generated as a design in which the actual stroke length indicated by an extra thick line is superimposed on the full stroke length indicated by a thin line in the form of a bar graph, at each wheel position in the vehicle in a plan view. Here, since the actual stroke display image can be viewed as a design of a wheel viewed from above, the actual stroke display image can also be used for the steering angle display or the toe angle display, for example.

Other embodiments

In the above-described embodiment, a functional block diagram is used in which the vehicle behavior calculation module 60 and the image processing module 50 that serve as the core constituent elements of the vehicle driving support device are embedded in the control device 20. However, this is only for the sake of convenience in the description. For example, the vehicle behavior calculation module 60 and the image processing module 50 may be independent from the control device 20 and connected thereto by the in-vehicle LAN or the like. Alternatively, the vehicle behavior calculation module 60 and the image processing module 50 may be integrated. Combination of the functional units may be changed as appropriate.

Although various layouts of the behavior images and the photographic images in the driving support image are possible as described above, the driving support image in multiple layouts may be manually or automatically selected and displayed as appropriate.

FIG. 9 shows a driving support image in yet another mode that is displayed on the monitor 21. In this driving support image, the tire path display image and the vehicle image combined with the stroke length display images and the idling ratio display images are combined with the front photographic image. The tire path display image is combined such that the tire path positions are fitted to the front photographic image. The vehicle image is combined at a position so as not to overlap with the tire path position, and in this example, at the upper left corner of the front photographic image. By displaying this front photographic image on the entire monitor screen as shown in FIG. 9, the front condition during running, including the tire path, can be easily understood, and the suspension behavior such as the stroke lengths and the idling ratios can also be grasped.

Industrial Applicability

The present invention can be used in every system that performs driving support by displaying vehicle behavior on a monitor.

Description of Reference Signs

1:      Camera
20:    Control device

21:     Monitor
50:     Image processing module
51:     Driving support image generation unit
52:     Photographic image memory
53:     Image correction unit
54:     Image selection unit
56:     Stroke length image generation unit
57:     Idling ratio image generation unit
58:     Tire path image generation unit
60:     Vehicle behavior calculation module
61:     Stroke length calculation unit
62:     Idling ratio calculation unit
63:     Tire path calculation unit

**Claims**

1. A vehicle driving support device comprising:

   a vehicle behavior calculation module (**60**) configured to calculate a current behavior value of each wheel suspended by a suspension mechanism;
   a driving support image generation unit (**51**) configured to generate a driving support image in which a behavior image made by imaging the behavior value obtained for each wheel is disposed at a corresponding position in a vehicle image; and
   a monitor (**21**) configured to display the driving support image,
   **characterized in that**
   the vehicle behavior calculation module (**60**) is provided with an idling ratio calculation unit (**57**) configured to find an idling ratio of the wheel as one kind of the behavior value, wherein the idling ratio of each wheel is obtained as a ratio of the wheel speed of the wheel to a reference wheel speed, which is a minimum value of the wheel speed; and
   the behavior image includes a wheel image that expresses the idling ratio of the wheel.

2. The vehicle driving support device according to claim 1,
   wherein the behavior value is imaged as a wheel image in the vehicle image, and the behavior value is expressed by a visual difference in the wheel image.

3. The vehicle driving support device according to claim 1,
   wherein the idling ratio of the wheel is expressed using a color.

4. The vehicle driving support device according to any one of claims 1 to 3,
   wherein the vehicle behavior calculation module (**60**) is provided with a stroke length calculation unit (**61**) configured to find a suspension stroke length of each wheel as one kind of the behavior value.

5. The vehicle driving support device according to any one of claims 1 to 4,
   wherein the driving support image generation unit (**51**) incorporates a photographic image given from an on-vehicle camera unit (**2**) configured to photograph the front side of the vehicle and the left and right sides of the vehicle into the driving support image.

6. The vehicle driving support device according to any one of claims 1 to 5,
   wherein the vehicle behavior calculation module (**60**) is provided with a tire path calculation unit (**58**) configured to find a predicted tire path based on a state of the suspension mechanism and a steering angle, and the driving support image generation unit (**51**) incorporates the predicted tire path into the driving support image.

**Patentansprüche**

1. Fahrzeugfahrassistenzvorrichtung, mit:

   einem Fahrzeugverhaltensberechnungsmodul (60), das konfiguriert ist, um einen aktuellen Verhaltenswert für jedes durch einen Aufhängungsmechanismus aufgehängte Rad zu berechnen;
   einer Fahrassistenzbilderzeugungseinheit (51), die konfiguriert ist, um ein Fahrassistenzbild zu erzeugen, in dem ein durch Abbildung des für jedes Rad erhaltenen Verhaltenswerts erstelltes Verhaltensbild an einer entsprechenden Position in einem Fahrzeugbild angeordnet ist; und
   einem Monitor (21), der konfiguriert ist, um das Fahrassistenzbild anzuzeigen,
   **dadurch gekennzeichnet, dass**
   das Fahrzeugverhaltensberechnungsmodul (60) mit einer Freizustandsverhältnisberechnungseinheit (57) versehen ist, die konfiguriert ist, um ein Freizustandsverhältnis des Rades als eine Art des Verhaltenswerts zu erstellen, wobei das Freizustandsverhältnis jedes Rades als ein Verhältnis der Raddrehzahl des Rades zu einer Referenzraddrehzahl, die ein Minimalwert der Raddrehzahl ist, erhalten wird; und
   das Verhaltensbild ein Radbild umfasst, das das Freizustandsverhältnis des Rades ausdrückt.

2. Fahrzeugfahrassistenzvorrichtung gemäß Anspruch 1,
   wobei der Verhaltenswert als ein Radbild im Fahrzeugbild abgebildet wird, und der Verhaltenswert durch eine visuelle Differenz im Radbild ausgedrückt wird.

**3.** Fahrzeugfahrassistenzvorrichtung gemäß Anspruch 1,
wobei das Freizustandsverhältnis des Rades unter Verwendung einer Farbe ausgedrückt wird.

**4.** Fahrzeugfahrassistenzvorrichtung gemäß einem der Ansprüche 1 bis 3,
wobei das Fahrzeugverhaltensberechnungsmodul (60) mit einer Hublängenberechnungseinheit (61) versehen ist, die konfiguriert ist, um einen Federweg jedes Rades als eine Art des Verhaltenswert zu erstellen.

**5.** Fahrzeugfahrassistenzvorrichtung gemäß einem der Ansprüche 1 bis 4,
wobei die Fahrassistenzbilderzeugungseinheit (51) ein von einer fahrzeuginternen Kameraeinheit (2), die konfiguriert ist, um die Vorderseite des Fahrzeugs sowie die linke und rechte Seite des Fahrzeugs in dem Fahrassistenzbild zu fotografieren, bereitgestelltes fotografisches Bild einarbeitet.

**6.** Fahrzeugfahrassistenzvorrichtung gemäß einem der Ansprüche 1 bis 5,
wobei das Fahrzeugverhaltensberechnungsmodul (60) mit einer Reifenwegberechnungseinheit (58) versehen ist, die konfiguriert ist, um einen vorhergesagten Reifenweg basierend auf einem Zustand des Aufhängungsmechanismus und eines Lenkwinkels herauszufinden, und die Fahrassistenzbilderzeugungseinheit (51) den vorhergesagten Reifenweg in das Fahrassistenzbild einarbeitet.

**Revendications**

**1.** Dispositif d'assistance à la conduite de véhicule comprenant :

un module de calcul de comportement de véhicule (60) configuré pour calculer une valeur de comportement en cours pour chaque roue suspendue par un mécanisme de suspension ;
une unité de production d'image d'assistance à la conduite (51) configurée pour produire une image d'assistance à la conduite dans laquelle une image de comportement fabriquée en mettant en image la valeur de comportement obtenue pour chaque roue est disposée en une position correspondante dans une image de véhicule ; et
un moniteur (21) configuré pour afficher l'image d'assistance à la conduite,
**caractérisé en ce que**
le module de calcul de comportement de véhicule (60) est prévu avec une unité de calcul de taux d'inactivité (57) configurée pour trouver un taux d'inactivité de la roue en tant qu'une sorte de la valeur de comportement, dans lequel le taux d'inactivité de chaque roue est obtenu en tant que rapport de la vitesse de roue de la roue à une vitesse de roue de référence, qui est une valeur minimale de la vitesse de roue ; et l'image de comportement inclut une image de roue qui exprime le taux d'inactivité de la roue.

**2.** Dispositif d'assistance à la conduite de véhicule selon la revendication 1,
dans lequel la valeur de comportement est mise en image en tant qu'image de roue dans l'image de véhicule, et la valeur de comportement est exprimée par une différence visuelle dans l'image de roue.

**3.** Dispositif d'assistance à la conduite de véhicule selon la revendication 1,
dans lequel le taux d'inactivité de la roue est exprimé à l'aide d'une couleur.

**4.** Dispositif d'assistance à la conduite de véhicule selon l'une quelconque des revendications 1 à 3,
dans lequel le module de calcul de comportement de véhicule (60) est prévu avec une unité de calcul de course (61) configurée pour trouver une course de suspension de chaque roue en tant qu'une sorte de la valeur de comportement.

**5.** Dispositif d'assistance à la conduite de véhicule selon l'une quelconque des revendications 1 à 4,
dans lequel l'unité de production d'image d'assistance à la conduite (51) incorpore une image photographique donnée depuis une unité de caméra embarquée sur un véhicule (2) configurée pour photographier le côté avant du véhicule et les côtés gauche et droit du véhicule dans l'image d'assistance à la conduite.

**6.** Dispositif d'assistance à la conduite de véhicule selon l'une quelconque des revendications 1 à 5,
dans lequel le module de calcul de comportement de véhicule (60) est prévu avec une unité de calcul de trajectoire de pneumatique (58) configurée pour trouver une trajectoire de pneumatique prévue sur la base d'un état du mécanisme de suspension et d'un angle de braquage, et l'unité de production d'image d'assistance à la conduite (51) incorpore la trajectoire de pneumatique prévue dans l'image d'assistance à la conduite.

Fig.1

Driving support image

Idling ratio display image

Stroke length display image

Actual stroke length

Full stroke length

Driving support image generation unit

Car illustration

Reference wheel speed

Idling ratio

Vr

Idling ratio calculation unit

R3 R4 R1 R2

Wheel speed

V3 V4 V1 V2

Stroke length

S3 S4 S1 S2

9

Fig.2

Stroke length

S2  S1  S4  S3

Wheel speed

V2  V1  V4  V3

Steering angle

θ

Sensor signal processing module

22

EP 2 769 883 B1

Fig.3

Fig.4

# Fig.5

Tire path display image

Idling ratio display image

Stroke length display image

Fig.6

Fig.7

Stroke length
display image

Full stroke length

Actual stroke length

## Fig.8

Stroke length display image

Full stroke length

Actual stroke length

## Fig.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011010346 A
- JP 2010234937 A
- JP 2006240401 A